# EUROPÄISCHE PATENTSCHRIFT

(11) **EP 1 055 839 B1**
(45) Veröffentlichungstag und Bekanntmachung des Hinweises auf die Patenterteilung: **28.07.2004**
(21) Anmeldenummer: 00106161.3
(22) Anmeldetag: 21.03.2000
(51) Int. Cl.: F16F 13/10

(54) **Hydraulisch dämpfendes Lager**
Hydraulically damped support
Support amorti hydrauliquement

(30) Priorität: 27.05.1999 DE 19924185; 13.07.1999 DE 19932583
(43) Veröffentlichungstag der Anmeldung: 29.11.2000
(73) Patentinhaber: Carl Freudenberg KG, 69469 Weinheim (DE)
(72) Erfinder: Hamaekers, Arno, 69517 Gorxheimertal (DE); Rudolf, Hans-Joachim, 26935 Stadland (DE)

(56) Entgegenhaltungen:
- EP-A- 0 351 737
- EP-A- 0 523 896
- EP-A- 0 559 506
- US-A- 4 826 126

## Beschreibung

### Technisches Gebiet

Die Erfindung betrifft ein hydraulisch dämpfendes Lager mit einem ersten Verankerungsteil und einem relativ zum ersten Verankerungsteil beweglichen zweiten Verankerungsteil, mit einem zwischen dem ersten und dem zweiten Verankerungsteil wirkenden Federelement, mit einem mit Dämpfungsflüssigkeit gefüllten Arbeitsraum und einem von diesem getrennten und über einen von einer Kanalwandung begrenzten Dämpfungskanal flüssigkeitsleitend mit dem Arbeitsraum verbundenen Ausgleichsraum, wobei das Volumen des Arbeitsraums bei einer Relativbewegung vom ersten und zweiten Stützkörper verändert wird, so daß Dämpfungsflüssigkeit in dem Dämpfungskanal zwischen Ausgleichsraum und Arbeitsraum bewegt wird, und mit einem an dem ersten Verankerungsteil angeordneten Verdränger, der sich in den Arbeitsraum erstreckt und der mit dem ersten Verankerungsteil relativ zu dem zweiten Verankerungsteil bewegbar ist.

### Stand der Technik

Ein solches hydraulisch dämpfendes Lager ist aus der EP 0 523 896A1 bekannt.

Durch ein solches Lager können niederfrequente Schwingungen aufgrund von Resonanzreaktionen der Dämpfungsflüssigkeit in dem Dämpfungskanal reduziert werden. Dabei ist es wünschenswert, daß der Dämpfungskanal möglichst lang ist, um die Masse des in dem Dämpfungskanal bewegten Fluids zu vergrößern. Ein langer Dämpfungskanal führt bei vorbekannten Lösungen zu einer großen Bauhöhe des Hydrolagers. Eine solche ist jedoch dann von Nachteil, wenn der Einbauraum, wie beispielsweise in einem Motorraum, begrenzt ist.

### Darstellung der Erfindung

Der Erfindung liegt die Aufgabe zugrunde, ein hydraulisch dämpfendes Lager derart weiterzubilden, daß ein langer Dämpfungskanal bei gleichzeitig geringer Bauhöhe des Lagers erzielt wird.

Diese Aufgabe wird bei einem hydraulisch dämpfenden Lager der eingangs genannten Art dadurch gelöst, daß die Kanalwandung des Dämpfungskanals abschnittsweise durch den Verdränger gebildet ist.

Aufgrund der erfindungsgemäßen Gestaltung bewirkt der Verdränger eine Verlängerung des Dämpfungskanals, ohne daß dadurch die Bauhöhe des Lagers vergrößert würde. Der Verdränger kann dabei so ausgebildet sein, daß er im ausgefederten Zustand keine Kanalverlängerung und im teilweise eingefederten oder vollständig eingefederten Zustand des Lagers die Kanalverlängerung bewirkt. In dem verlängerten Dämpfungskanal ist eine relativ große Menge an Dämpfungsflüssigkeit aufgenommen, was die Wirksamkeit der durch diese erfolgende Schwingungstilgung erhöht.

Gemäß einer vorteilhaften Weiterbildung der Erfindung ist vorgesehen, daß der Verdränger als Anschlag ausgebildet ist, welcher die Bewegung zwischen erstem und zweitem Verankerungsteil begrenzt.

Ein besonders langer Dämpfungskanal wird dadurch erzielt, daß die Kanalwandung des Dämpfungskanals abschnittsweise durch einen an dem zweiten Verankerungsteil angeordneten Stützkörper gebildet wird. Auf diese Weise kann ein langer Dämpfungskanal gebildet werden, dessen Kanalwandung in einem ersten Abschnitt durch den Stützkörper und in einem zweiten Abschnitt durch den Verdränger, gegebenenfalls zusammen mit dem Stützkörper, gebildet wird.

Gemäß einer vorteilhaften Ausbildung der Erfindung ist vorgesehen, daß der Verdränger im teilweise eingefederten Zustand des Lagers mit einem ersten Anlageabschnitt, der einen ersten Abschnitt der Kanalwandung bildet, auf dem zweiten Stützkörper anliegt. Hierdurch wird erreicht, daß z.B. bei Nennbelastung des Lagers durch den Verdränger eine Verlängerung des Dämpfungskanals bewirkt wird, während dies im entlasteten Zustand des Lagers nicht der Fall ist.

Gemäß einer Weiterbildung dieses Erfindungsgedankens ist vorgesehen, daß bei der Relativbewegung des ersten Verankerungsteils zu dem zweiten Verankerungsteil der erste Anlageabschnitt an dem Stützkörper anliegend elastisch verformt wird. Infolgedessen wird eine Relativbewegung von erstem und zweitem Verankerungsteil nicht oder nur unwesentlich behindert.

Als vorteilhaft hat sich erwiesen, daß sich der erste Anlageabschnitt in axialer Richtung des Lagers zu dem zweiten Stützkörper hin erstreckt. Infolgedessen bildet der zweite Anlageabschnitt eine im wesentlichen parallel zur axialen Richtung des Lagers ausgerichtete Kanalwandung.

Gemäß einer vorteilhaften Ausgestaltung der Erfindung ist vorgesehen, daß der Verdränger einen sich in radialer Richtung des Lagers erstreckenden zweiten Anlageabschnitt aufweist, der einen zweiten Abschnitt der Kanalwandung bildet und an dem zweiten Verankerungsteil anliegt.

Dabei ist der zweite Anlageabschnitt flexibel ausgebildet, um insbesondere Querbewegungen des ersten Verankerungsteils zu dem zweiten Verankerungsteil zu ermöglichen.

Die Herstellung des Hydrolagers wird dadurch vereinfacht, daß das zweite Verankerungsteil im Bereich der Anlage des zweiten Anlageabschnitts mit einer dichtenden Deckschicht insbesondere aus Elastomer überzogen ist.

Eine weitere Verbesserung wird dadurch erzielt, daß in dem ersten Anlageabschnitt ein Kanalaustritt ausgebildet ist, der den Dämpfungskanal mit dem Arbeitsraum verbindet.

Die Festigkeit des Verdrängers wird dadurch verbessert, daß der Verdränger einen im Elastomer eingebettenen Stützkörper aufweist.

Die Herstellungskosten können dadurch gesenkt werden, daß der Verdränger einstückig ausgebildet ist.

Eine weitere Verbesserung der Schwingungsisolation kann dadurch erreicht werden, daß der Verdränger in dem Arbeitsraum einen zu dem Federkörper benachbarten Flüssigkeitskanal abteilt. Die in dem Flüssigkeitskanal aufgenommenen Dämpfungskanal bildet zusammen mit dem als Blähfeder wirkenden Federkörper ein schwingfähiges System. Dieses kann in der Weise abgestimmt werden, daß eine Schwingungstilgung einer bestimmten Frequenz erfolgt.

Gemäß einer Weiterbildung dieses Erfindungsgedankens ist vorgesehen, daß der Flüssigkeitskanal über eine in dem Verdränger ausgebildete Öffnung mit der Arbeitskammer flüssigkeitsleitend verbunden ist. Eine solche Öffnung beeinflußt die Resonanzfrequenz der in dem Flüssigkeitskanal aufgenommenen Dämpfungsflüssigkeit. Dabei kann die Öffnung auch durch den sich in radialer Richtung des Lagers erstreckenden zweiten Anlageabschnitt des Verdrängers verschließbar ausgebildet werden. In diesem Fall würde sich bei Überschreiten eines gewissen Druckunterschieds zwischen Dämpfungskanal und Flüssigkeitskanal der zweite Anlageabschnitt die ansonsten verschlossene Öffnung freigeben.

Vorteilhafterweise ist vorgesehen, daß eine Verbindung zwischen dem Flüssigkeitsraum und dem Arbeitsraum durch eine Aussparung, welche in dem zweiten Anlageabschnitt vorgesehen ist, und durch den Kanalaustritt hergestellt ist, wobei der Kanalaustritt und die Aussparung insbesondere benachbart zueinander angeordnet sind.

Die schwingungsisolierenden Eigenschaften des Lagers können dadurch weiter verbessert werden, daß eine mit Dämpfungsflüssigkeit beaufschlagte Trennwand vorgesehen ist, die den Arbeitsraum von dem Ausgleichsraum trennt. Die Trennwand kann insbesondere als flexible Membran ausgebildet sein.

In diesem Fall wird ein langer Dämpfungskanal dadurch erzielt, daß die Trennwand von dem Dämpfungskanal radial wenigstens abschnittsweise umschlossen ist.

### Kurzbeschreibung der Zeichnungen

Der Gegenstand der Erfindung wird nachfolgend anhand der Zeichnung weiter verdeutlicht.
- Fig. 1: zeigt einen Querschnitt durch ein erfindungsgemäßes Lager.
- Fig. 2: zeigt einen Querschnitt durch ein erfindungsgemäßes Lager gemäß einer weiteren Ausführungsform.

### Ausführung der Erfindung

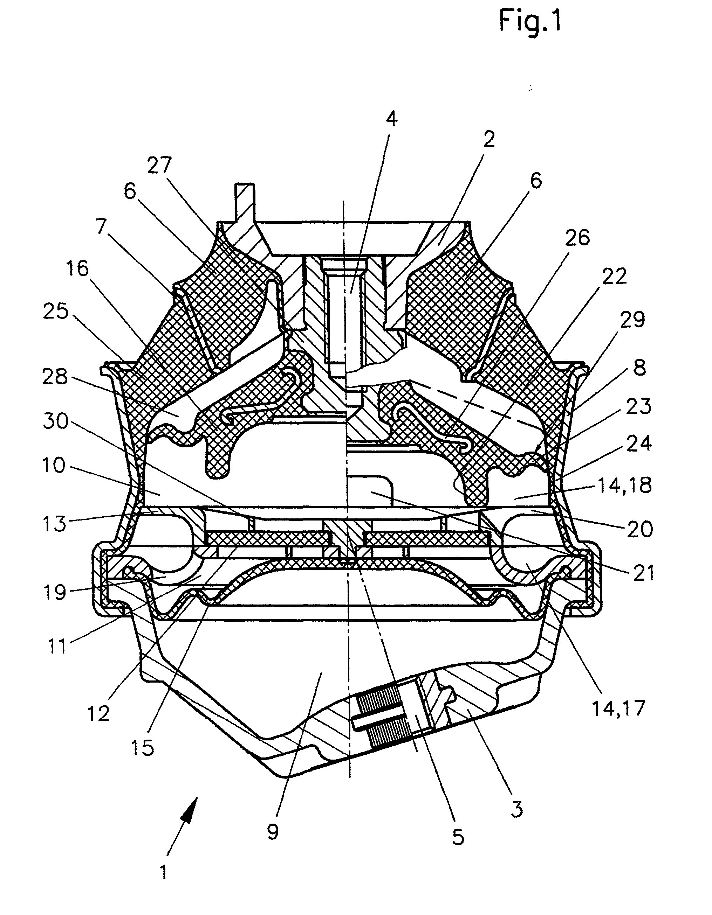

In Fig. 1 ist ein hydraulisch dämpfendes Lager 1 mit einem ersten Verankerungsteil 2 und einem relativ zu dem ersten Verankerungsteil 2 beweglichen zweiten Verankerungsteil 3 dargestellt. Über die aus Metall bestehenden ersten und zweiten Verankerungsteile 2, 3 kann das Lager z.B. einerseits mit dem Motor und andererseits mit dem Chassis (nicht dargestellt) verbunden werden, wobei eine Befestigung über die Bohrungen 4 und 5 erfolgt.

Zwischen dem ersten und zweiten Verankerungsteil 2, 3 ist ein Federelement 6 vorgesehen, welches als Gummikörper ausgebildet ist. Der ringförmige Gummikörper hat im wesentlichen die Form eines Kegelstumpfs, wobei das in radialer Richtung äußere Ende mit dem zweiten Verankerungsteil 3 das in radialer Richtung innere Ende mit dem ersten Verankerungsteil 2 verbunden ist. Dabei kann das Federelement 6 durch Vulkanisieren mit dem ersten und dem zweiten Verankerungsteil 2, 3 verbunden sein. In dem das Federelement 6 bildenden Gummikorper ist ein Stützring 7 aufgenommen, der den Gummikörper in einen radial inneren und einen radial äußeren Abschnitt unterteilt.

Das zweite Verankerungsteil 3 weist einen Gehäuseabschnitt 8 auf, der die Lagerachse 9 ringförmig umschließt. An dem dem ersten Verankerungsteil zugewandten Ende des Gehäuseabschnitts 8 ist das Federelement 6 festgelegt.

In dem durch den Gehäuseabschnitt 8 umgrenzten Raum ist ein Arbeitsraum 10 und ein Ausgleichsraum 11 ausgebildet. Der Arbeitsraum ist von dem Ausgleichsraum durch eine Trennwand 12, welche an einen Stützkörper 13 gelagert ist, getrennt. Dabei sind der Arbeitsraum und der Ausgleichsraum mit Dämpfungsflüssigkeit gefüllt und über einen Dämpfungskanal 14 flüssigkeitsleitend miteinander verbunden.

Der Arbeitsraum 10 wird durch das ersten Verankerungsteil 2, das Federelement 6, den Gehäuseabschnitt 8, die Trennwand 12 und den Stützkörper 13 begrenzt. Der Ausgleichsraum 11 wird durch die dem Arbeitsraum 10 abgewandte Seite der Trennwand 12 und des Stützkörpers 13 sowie durch eine als Rollbalg ausgebildete elastische Membran 15 begrenzt.

An dem ersten Verankerungsteil 2 ist ein sich in dem Arbeitsraum 10 erstreckender Verdränger 16 in der Dämpfungsflüssigkeit angeordnet. Der Verdränger 16 ist zusammen mit dem Verankerungsteil 2 relativ zu dem zweiten Verankerungsteil 3 bewegbar.

Bei einer Relativbewegung zwischen dem ersten Verankerungsteil 2 und zweiten Verankerungsteil 3 wird das Volumen des mit Dämpfungsflüssigkeit vollständig gefüllten Arbeitsraums 10 verändert, so daß Dämpfungsflüssigkeit durch den Dämpfungskanal 14 zwischen dem Arbeitsraum 10 und dem Ausgleichsraum 11 bewegt wird. Die elastische Membran 15 ermöglicht es, daß in dem Ausgleichsraum 11 ein veränderliches Volumen der Dämpfungsflüssigkeit aufgenommen wird. Bei Einleitung von Schwingungen in das Lager 1, wird eine Schwingungsreduzierung dadurch erzielt, daß die in dem Dämpfungskanal 14 aufgenommene Dämpfungsflüssigkeit gleichfalls in Schwingungen versetzt wird, wenn die Eigenfrequenz der Dämpfungsflüssigkeit in dem Dämpfungskanal 14 angeregt wird. Hierbei ist es von Vorteil, wenn die Masse der in dem Flüssigkeitskanal 14 bewegten Dämpfungsflüssigkeit möglichst groß ist. Dies kann durch einen besonders langen Dämpfungskanal 14 erreicht werden.

Der Dämpfungskanal 14 weist deshalb einen ersten Abschnitt 17 und einen zweiten Abschnitt 18 auf, welcher den ersten Abschnitt 17 verlängert.

Der erste Abschnitt 17 des Dämpfungskanals 14 ist in dem Stützkörper 13 ausgebildet und erstreckt sich in Umfangsrichtung außen um die Trennwand 12 herum. Dabei ist der erste Abschnitt des Dämpfungskanals einerseits durch den Stützkörper 13 und andererseits durch den Gehäuseabschnitt 8 des zweiten Verankerungsteils 3 begrenzt. Der erste Kanalabschnitt 17 ist über eine erste Kanalöffnung 19 zum Ausgleichsraum 11 hin und über eine zweite Kanalöffnung 20 zum Arbeitsraum 10 beziehungsweise zum zweiten Kanalabschnitt 18 hin geöffnet.

Der zweite Kanalabschnitt 18 erstreckt sich wie der erste Kanalabschnitt 17 in Umfangsrichtung ringförmig entlang des Gehäuseabschnitts 8. Er wird einerseits durch den an dem ersten Verankerungsteil 2 festgelegten Verdränger 16 und andererseits durch den an dem zweiten Verankerungsteil 3 festgelegten Stützkörper 13 sowie den Gehäuseabschnitt 8 begrenzt. Der zweite Kanalabschnitt 18 ist über die zweite Kanalöffnung 20 zum ersten Kanalabschnitt 17 und über die dritte Kanalöffnung 21 zum Arbeitsraum 10 hin geöffnet.

Im unbelasteten, ausgefederten Zustand des Lagers 1, welche in der linken Bildhälfte in Fig. 1 dargestellt ist, liegt der Verdränger 16 nicht an dem Stützkörper 13 an. In diesem Fall besteht der Dämpfungskanal 14 nur aus dem ersten Kanalabschnitt 17.

Bei belastetem, teilweise eingefedertem Lager 1 liegt der Verdränger 16 mit einem ersten Anlageabschnitt 22 an dem Stützkörper 13 und einem zweiten Anlageabschnitt 23 an dem Gehäuseabschnitt 8 an. Erste und zweite Anlageabschnitte 22, 23 bilden somit zusammen mit dem Stützkörper 13 und dem Gehäuseabschnitt 8 die Kanalwandung des Dämpfungskanals 14 in dem zweiten Kanalabschnitt 18.

Die ersten und zweiten Anlageabschnitte 22, 23 sind flexibel ausgebildet und ermöglichen dadurch einerseits eine Relativbewegung von ersten und zweiten Verankerungsteilen 2, 3 entlang und quer zur Lagerachse 9. Der ersten Anlageabschnitt 22 ist an dem Körper des Verdrängers 16 ausgebildet und erstreckt sich in Richtung der Lagerachse 9 zu dem zweiten Stützkörper 3 hin. Der erste Anlageabschnitt 22 ist dabei so angeordnet, daß er im Bereich des radial äußeren Endes der Trennwand 12 an dem Stützkörper 13 zur Anlage kommt.

Der zweite Anlageabschnitt 23 erstreckt sich in radialer Richtung des Lagers, d.h. quer zur Lagerachse 9. Zur Erhöhung der Flexibilität weist er einen gewellten Querschnitt auf. An dem radial außenliegenden Ende hat der zweite Anlageabschnitt die Form einer spitz zulaufenden Anlagelippe. Der Gehäuseabschnitt 8 trägt an seiner Innenwandung eine Deckschicht 24, an der der zweite Anlageabschnitt 23 dichtend anliegt.

Der Verdränger 16 besteht im wesentlichen aus Elastomer 25 und weist ein in diesen eingebettetes Stützkörperelement 26 aus Metall auf. Die ersten und zweiten Anlageabschnitte 22 und 23 sind einstückig mit dem Körper des Verdrängers 16 aus Elastomer 25 gebildet. Der Verdränger 16 über einen Zapfen 27 an dem ersten Verankerungsteil 2 befestigt.

Der Verdränger 16 teilt in dem Arbeitsraum 10 einen zu dem Federelement 6 benachbarten Flüssigkeitskanal 28 ab. Dabei sind die der Lagerachse 9 zugewandten Seite des Federelements 6 und die dem Federelement 6 zugewandte Seite des Verdrängers 16 im wesentlichen parallel ausgebildet. Der Flüssigkeitskanal 28 kann über eine Öffnung 29 mit dem übrigen Arbeitsraum 10 verbunden sein. In dem dargestellten Ausführungsbeispiel ist die Öffnung 29 durch den zweiten Anlageabschnitt 23 des Verdrängers 16 verschlossen. Da dieser jedoch nachgiebig ausgebildet ist, wird die Öffnung 29 freigegeben, sobald sich ein erheblicher Druckunterschied zwischen dem zweiten Abschnitt 18 des Dämpfungskanal 14 und dem Flüssigkeitskanal 28 aufbaut. Eine solche Öffnung könnte jedoch auch in dem Körper des Verdrängers 16 ausgebildet sein (nicht dargestellt).

Die den Arbeitsraum 10 von dem Ausgleichsraum 11 trennende Trennwand 12 ist als elastische Membran ausgebildet. Sie ist beidseitig mit Dämpfungsflüssigkeit beaufschlagt. Die Trennwand 12 wird dabei durch Halteabschnitte 30 des Stützkörpers 13 in Position gehalten.

Der Verdränger 16 ist zudem als Anschlag ausgebildet, welcher die Bewegung zwischen erstem und zweitem Verankerungsteil 2, 3 begrenzt. In seiner unteren Position liegt der Verdränger an dem Stützkörper 13 an, wobei der elastisch ausgebildete erste Anlageabschnitt 22 in radialer Richtung nach außen weggebogen wird.

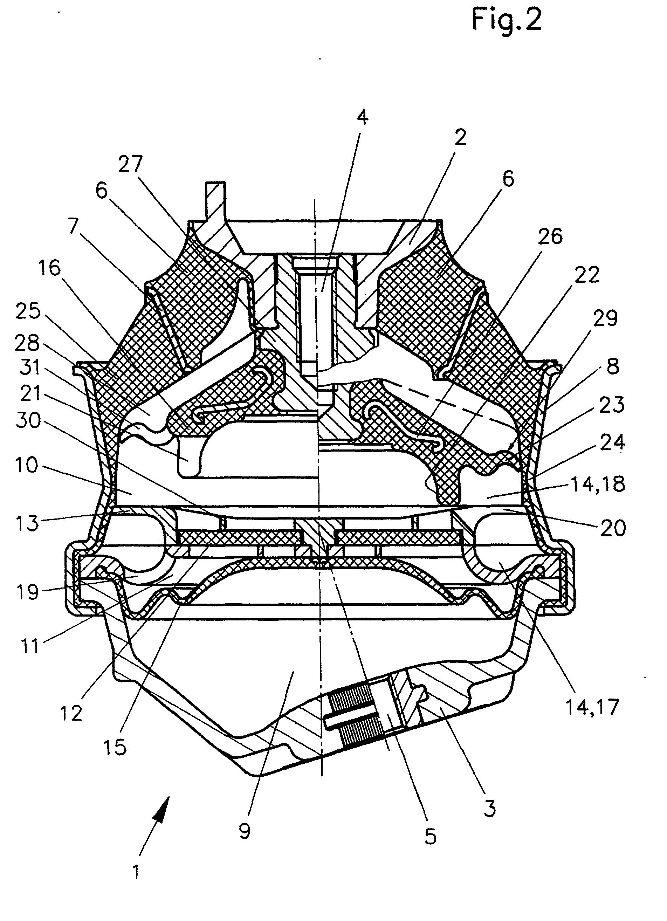

Das in Figur 2 dargestellte hydraulisch dämpfende Lager 1 entspricht weitgehend der in Figur 1 dargestellten Ausführungsform. Für übereinstimmende Teile werden daher dieselben Bezugsziffern verwendet. Bei dem in Figur 2 dargestellten hydraulisch dämpfenden Lager 1 ist in dem zweiten Anlageabschnitt 23 eine Ausnehmung 31 vorgesehen, welche benachbart zu dem Kanalaustritt 21 angeordnet ist. Auf diese Weise entsteht eine Verbindung zwischen dem Flüssigkeitsraum 28 und dem Arbeitsraum 10.

## Patentansprüche

1. Hydraulisch dämpfendes Lager (1) mit einem ersten Verankerungsteil (2) und einem relativ zu dem ersten Verankerungsteil (2) beweglichen zweiten Verankerungsteil (3), mit einem zwischen dem ersten und dem zweiten Verankerungsteil (2, 3) wirkenden Federelement (6), mit einem mit Dämpfungsflüssigkeit gefüllten Arbeitsraum (10) und einem von diesem getrennten und über einen von einer Kanalwandung begrenzten Dämpfungskanal (14, 17) flüssigkeitsleitend mit dem Arbeitsraum (10) verbundenen Ausgleichsraum (11), wobei das Volumen des Arbeitsraums (10) bei einer Relativbewegung von erstem und zweitem Stützkörper (2, 3) verändert wird, so daß Dämpfungsflüssigkeit in dem Dämpfungskanal (14, 17) zwischen Ausgleichsraum (11) und Arbeitsraum (10) bewegt wird, und mit einem an dem ersten Verankerungsteil (2) angeordneten Verdränger (16), der sich in den Arbeitsraum (10) erstreckt und der mit dem ersten Verankerungsteil (2) relativ zu dem zweiten Verankerungsteil (3) bewegbar ist, **dadurch gekennzeichnet, daß** die Kanalwandung des Dämpfungskanals (14, 17, 18) abschnittsweise durch den Verdränger (16) gebildet ist.

2. Lager nach Anspruch 1, **dadurch gekennzeichnet, daß** der Verdränger (16) als Anschlag ausgebildet ist, welcher die Bewegung zwischen erstem und zweitem Verankerungsteil (2, 3) begrenzt.

3. Lager nach Anspruch 1 oder 2, **dadurch gekennzeichnet, daß** die Kanalwandung des Dämpfungskanals (14, 17, 18) abschnittweise durch einen an dem zweiten Verankerungsteil (3) angeordneten Stützkörper (13) gebildet wird.

4. Lager nach einem der Ansprüche 1 bis 3, **dadurch gekennzeichnet, daß** der Verdränger (16) im teilweise eingefederten Zustand des Lagers (1) mit einem ersten Anlageabschnitt (22), der einen ersten Abschnitt der Kanalwandung bildet, auf dem Stützkörper (13) anliegt.

5. Lager nach Anspruch 4, **dadurch gekennzeichnet, daß** bei der Relativbewegung des ersten Verankerungsteil (2) zu dem zweiten Verankerungsteil (3) der Verdränger (16) an dem Stützkörper (13) anliegend elastisch verformt wird.

6. Lager nach Anspruch 4 oder 5, **dadurch gekennzeichnet, daß** sich der erste Anlageabschnitt (22) in axialer Richtung des Lagers (1) zu dem Stützkörper (13) hin erstreckt.

7. Lager nach einem der Ansprüche 1 bis 6, **dadurch gekennzeichnet, daß** der Verdränger (16) einen sich in radialer Richtung des Lagers (1) erstreckenden zweiten Anlageabschnitt (23) aufweist, der einen zweiten Abschnitt der Kanalwandung bildet und an dem zweiten Verankerungsteil (3) anliegt.

8. Lager nach Anspruch 7, **dadurch gekennzeichnet, daß** der zweite Anlageabschnitt (23) flexibel ausgebildet ist.

9. Lager nach Anspruch 7 oder 8, **dadurch gekennzeichnet, daß** das zweite Verankerungsteil (3) im Bereich der Anlage des zweiten Anlageabschnitts (23) mit einer dichtenden Deckschicht (24) insbesondere aus Elastomer überzogen ist.

10. Lager nach einem der Ansprüche 4 bis 9, **dadurch gekennzeichnet, daß** in dem ersten Anlageabschnitt (22) ein Kanalaustritt (21) ausgebildet ist, der den Dämpfungskanal (14, 17, 18) mit dem Arbeitsraum (10) verbindet.

11. Lager nach einem der Ansprüche 1 bis 10, **dadurch gekennzeichnet, daß** der Verdränger (16) einen in Elastomer eingebetteten Stützkörper (26) aufweist.

12. Lager nach einem der Ansprüche 1 bis 11, **dadurch gekennzeichnet, daß** der Verdränger (16) einstückig ausgebildet ist.

13. Lager nach einem der Ansprüche 1 bis 12, **dadurch gekennzeichnet, daß** der Verdränger (16) in dem Arbeitsraum (10) einen zu dem Federelement (6) benachbarten Flüssigkeitsraum (28) abteilt.

14. Lager nach Anspruch 13, **dadurch gekennzeichnet, daß** der Flüssigkeitsraum (28) über eine in dem Verdränger (16) ausgebildete Öffnung (29) mit dem übrigen Arbeitsraum (10) flüssigkeitsleitend verbunden ist.

15. Lager nach einem der Ansprüche 1 bis 13, **dadurch gekennzeichnet, daß** eine Verbindung zwischen dem Flüssigkeitsraum (28) und dem Arbeitsraum (10) durch eine Aussparung (31), welche in dem zweiten Anlageabschnitt (23) vorgesehen ist, und durch den Kanalaustritt (21) hergestellt ist, wobei der Kanalaustritt (21) und die Aussparung (31) insbesondere benachbart zueinander angeordnet sind.

16. Lager nach einem der Ansprüche 1 bis 15, **dadurch gekennzeichnet, daß** eine mit Dämpfungsflüssigkeit beaufschlagte Trennwand (12) vorgesehen ist, die den Arbeitsraum (10) von dem Ausgleichsraum (11) trennt.

17. Lager nach Anspruch 16, **dadurch gekennzeichnet, daß** die Trennwand (12) von dem Dämpfungskanal (14, 17, 18) radial wenigstens abschnittweise umschlossen ist.

## Claims

1. A hydraulically damping mount (1) having a first anchoring part (2) and a second anchoring part (3) which is moveable relative to the first anchoring part (2), having a spring element (6) acting between the first and the second anchoring parts (2, 3), having a working space (10) filled with damping fluid, and a compensating space (11) which is separated from the said working space and is connected in a fluid-conducting manner to the working space (10) via a damping duct (14, 17), which is bounded by a duct wall, the volume of the working space (10) being changed during a relative movement of the first and second supporting bodies (2, 3), so that damping fluid in the damping duct (14, 17) is moved between the compensating space (11) and the working space (10), and having a displacer (16) which is arranged on the first anchoring part (2), extends into the working space (10) and can be moved with the first anchoring part (2) relative to the second anchoring part (3), **characterized in that** the duct wall of the damping duct (14, 17, 18) is formed in some sections by the displacer (16).

2. A mount according to claim 1, **characterized in that** the displacer (16) is designed as a stop which limits the movement between the first and second anchoring parts (2, 3).

3. A mount according to either of claims 1 and 2, **characterized in that** the duct wall of the damping duct (14, 17, 18) is formed in some sections by a supporting body (13) arranged on the second anchoring part (3).

4. A mount according to any one of claims 1 to 3, **characterized in that**, in the partially compressed state of the mount (1), the displacer (16) bears with a first bearing section (22), which forms a first section of the duct wall, on the supporting body (13).

5. A mount according to claim 4, **characterized in that**, during the relative movement of the first anchoring part (2) with respect to the second anchoring part (3), the displacer (16), bearing against the supporting body (13), is elastically deformed.

6. A mount according to either of claims 4 and 5, **characterized in that** the first bearing section (22) extends in the axial direction of the mount (1) towards the supporting body (13).

7. A mount according to any one of claims 1 to 6, **characterized in that** the displacer (16) has a second bearing section (23) which extends in the radial direction of the mount (1), forms a second section of the duct wall and bears against the second anchoring part (3).

8. A mount according to claim 7, **characterized in that** the second bearing section (23) is of flexible design.

9. A mount according to either of claims 7 and 8, **characterized in that** the second anchoring part (3) is covered, in the region in which the second bearing section (23) bears, with a sealing outer layer (24), in particular of elastomer.

10. A mount according to any one of claims 4 to 9, **characterized in that** a duct outlet (21) which connects the damping duct (14, 17, 18) to the working space (10) is formed in the first bearing section (22).

11. A mount according to any one of claims 1 to 10, **characterized in that** the displacer (16) has a supporting body (26) embedded in elastomer.

12. A mount according to any one of claims 1 to 11, **characterized in that** the displacer (16) is of integral design.

13. A mount according to any one of claims 1 to 12, **characterized in that** the displacer (16) partitions off a fluid space (28) adjacent to the spring element (6) in the working space (10).

14. A mount according to claim 13, **characterized in that** the fluid space (28) is connected in a fluid-conducting manner to the rest of the working space (10) via an opening (29) formed in the displacer (16).

15. A mount according to any one of claims 1 to 13, **characterized in that** a connection between the fluid space (28) and the working space (10) is produced by a cutout (31), which is provided in the second bearing section (23), and by the duct outlet (21), the duct outlet (21) and the cutout (31) being arranged, in particular, adjacent to each other.

16. A mount according to any one of claims 1 to 15, **characterized in that** a partition (12) which is acted upon by damping fluid and separates the working space (10) from the compensating space (11) is provided.

17. A mount according to claim 16, **characterized in that** the partition (12) is radially surrounded at least in some sections by the damping duct (14, 17, 18).

## Revendications

1. Support (1) amortissant hydrauliquement, comprenant une première pièce d'ancrage (2) et une deuxième pièce d'ancrage (3) mobile relativement à la première pièce d'ancrage (2), un élément à ressort (6) agissant entre les première et deuxième pièces d'ancrage (2, 3), un espace de travail (10) rempli de liquide d'amortissement et un espace de compensation (11) qui en est séparé et est relié à l'espace de travail (10) de manière à conduire le liquide par l'intermédiaire d'un canal d'amortissement (14, 17) limité par une paroi de canal, le volume de l'espace de travail (10) étant modifié lors d'un mouvement relatif des première et deuxième pièces d'ancrage (2, 3) de manière telle que le liquide d'amortissement est déplacé dans le canal d'amortissement (14, 17) entre l'espace de compensation (11) et l'espace de travail (10), et un organe de refoulement (16) situé sur la première pièce d'ancrage (2), lequel s'étend dans l'espace de travail (10) et est déplaçable avec la première pièce d'ancrage (2) relativement à la deuxième pièce d'ancrage (3), **caractérisé en ce que** la paroi de canal du canal d'amortissement (14, 17, 18) est en partie constituée par l'organe de refoulement (16).

2. Support selon la revendication 1, **caractérisé en ce que** l'organe de refoulement (16) est réalisé sous la forme d'une butée qui limite le déplacement entre les première et deuxième pièces d'ancrage (2, 3).

3. Support selon la revendication 1 ou 2, **caractérisé en ce que** la paroi de canal du canal d'amortissement (14, 17, 18) est en partie constituée par un corps d'appui (13) situé sur la deuxième pièce d'ancrage (3).

4. Support selon l'une des revendications 1 à 3, **caractérisé en ce que** l'organe de refoulement (16), lorsque le support (1) est à l'état partiellement comprimé par ressort, est appliqué sur le corps d'appui (13) en une première partie de contact (22) qui constitue une première partie de la paroi de canal.

5. Support selon la revendication 4, **caractérisé en ce que**, lors du mouvement relatif de la première pièce d'ancrage (2) par rapport à la deuxième pièce d'ancrage (3), l'organe de refoulement (16) appliqué sur le corps d'appui (13) subit une déformation élastique.

6. Support selon la revendication 4 ou 5, **caractérisé en ce que** la première partie de contact (22) s'étend dans le sens axial du support (1) vers le corps d'appui (13).

7. Support selon l'une des revendications 1 à 6, **caractérisé en ce que** l'organe de refoulement (16) comporte une deuxième partie de contact (23) s'étendant dans le sens radial du support (1), laquelle constitue une deuxième partie de la paroi de canal et est appliquée sur la deuxième pièce d'ancrage (3).

8. Support selon la revendication 7, **caractérisé en ce que** la deuxième partie de contact (23) est réalisée de manière flexible.

9. Support selon la revendication 7 ou 8, **caractérisé en ce que** la deuxième pièce d'ancrage (3) est recouverte d'une couche de recouvrement (24) rendant étanche, plus particulièrement en élastomère, dans la zone d'application de la deuxième partie de contact (23).

10. Support selon l'une des revendications 4 à 9, **caractérisé par** la réalisation, dans la première partie de contact (22), d'une sortie de canal (21) qui relie le canal d'amortissement (14, 17, 18) à l'espace de travail (10).

11. Support selon l'une des revendications 1 à 10, **caractérisé en ce que** l'organe de refoulement (16) comprend un corps d'appui (26) encastré dans de l'élastomère.

12. Support selon l'une des revendications 1 à 11, **caractérisé en ce que** l'organe de refoulement (16) est réalisé d'une seule pièce.

13. Support selon l'une des revendications 1 à 12, **caractérisé en ce que** l'organe de refoulement (16) cloisonne, dans l'espace de travail (10), un espace de liquide (28) voisin de l'élément à ressort (6).

14. Support selon la revendication 13, **caractérisé en ce que** l'espace de liquide (28) est relié au reste de l'espace de travail (10), de manière à conduire le liquide, par l'intermédiaire d'un orifice (29) aménagé dans l'organe de refoulement (16).

15. Support selon l'une des revendications 1 à 13, **caractérisé en ce qu'**est prévue, entre l'espace de liquide (28) et l'espace de travail (10), une liaison par l'intermédiaire d'un évidement (31) prévu dans la deuxième partie de contact (23) et réalisé par la sortie du canal (21), la sortie du canal (21) et l'évidement (31) étant plus particulièrement placés au voisinage l'un de l'autre.

16. Support selon l'une des revendications 1 à 15, **caractérisé en ce qu'**est prévue une cloison (12) soumise à du liquide d'amortissement, laquelle sépare l'espace de travail (10) de l'espace de compensation (11).

17. Support selon la revendication 16, **caractérisé en ce que** la cloison (12) est entourée radialement, au moins sur une partie, par le canal d'amortissement (14, 17, 18).
